# EUROPÄISCHE PATENTANMELDUNG

(11) **EP 2 249 472 A2**
(43) Veröffentlichungstag der Anmeldung: **10.11.2010**
(21) Anmeldenummer: 10156736.0
(22) Anmeldetag: 17.03.2010
(51) Int. Cl.: H02P 6/18

(54) **Verfahren und Vorrichtung zum Bestimmen einer absoluten Winkellage eines Rotors eines Elektromotors**

(30) Priorität: 07.05.2009 DE 102009002907
(71) Anmelder: Robert Bosch GmbH, 70442 Stuttgart (DE)
(72) Erfinder: Frey, Heiko, 71254, Ditzingen (DE)

(57) **Zusammenfassung**

Die Erfindung betrifft eine Vorrichtung zum Bestimmen einer absoluten Winkellage eines Rotors (31) eines Elektromotors (3), wobei der Rotor (31) des Elektromotors (3) mehrere Wicklungen (32), die jeweils ein oder mehrere Spulenelemente (33) aufweisen, umfasst, wobei der komplexe Widerstand mindestens einer der Wicklungen (32) von dem komplexen Widerstand der anderen der mehreren Wicklungen (32) verschieden ist, wobei eine oder mehrere der Wicklungen (32) abhängig von einer Winkellage des Rotors (31) über ein Bürstenpaar eines Kommutators (36) kontaktierbar sind; umfassend:
- einen Schwingkreis, der mit mindestens einer über den Kommutator (36) an die durch das Bürstenpaar kontaktierte Wicklung (32) gebildet ist;
- einen Verstärker (11), der mit dem Schwingkreis verbunden ist, um die Schwingung des Schwingkreises anzuregen;
- eine Auswerteeinheit (17), um die Frequenz der Schwingung zu erfassen und eine Angabe der Frequenz als Angabe über die absolute Winkellage bereitzustellen.

## Beschreibung

### Technisches Gebiet

Die Erfindung betrifft ein Verfahren und eine Vorrichtung zur Bestimmung der absoluten Winkellage eines Rotors in einem Elektromotor.

### Stand der Technik

Zur Erfassung des Drehwinkels bzw. der Winkellage bei rotatorischen Elektromotoren werden üblicherweise geeignete Sensoren verwendet. Diese Sensoren können beispielsweise Positionsgeber auf der Motorwelle des Elektromotors, an dem Rotor des Elektromotors bzw. auf sonstigen durch den Elektromotor bewegten Teilen aufweisen. Die Positionsgeber können beispielsweise in Form von Ringmagneten, Pulsscheiben oder sonstigen Informationsträgern ausgebildet sein und mit einem Detektor zusammen wirken, der mindestens eine Stellung des Rotors des Elektromotors eindeutig einer absoluten Winkellage zuordnen kann.

Als Detektoren werden beispielsweise Hall-Sensoren verwendet, die eine von dem anliegenden Magnetfeld abhängige Hall-Spannung bereitstellen, über die Änderungen des Magnetfelds erkannt werden können.

Alternativ kann auf indirekte Weise der Strom bei der Ansteuerung von Wicklungen des Elektromotors mit einer Ansteuerspannung ausgewertet werden und Schwankungen der Stromstärke integriert werden, um die absolute Lage zu ermitteln.
Neben diesem Verfahren besteht die Möglichkeit, die Nuten eines Kommutators eines Elektromotors über die Stromaufnahme zu identifizieren. Überstreichen mehrere Bürsten einer Bürstenanordnung des Kommutators eine oder mehrere Nuten, werden dadurch zwei oder mehr als zwei Wicklungen des Rotors parallel geschaltet. Der veränderte gesamte Widerstand der Parallelschaltung bezüglich dem einer einzelnen Wicklung oder dem einer Parallelschaltung einer davon verschiedenen Anzahl von Wicklungen kann durch einen erhöhten Strom erfasst werden, der durch geeignete Maßnahmen ausgewertet werden kann.

Eine Drehzahlerfassung bei Gleichstrommotoren kann beispielsweise über eine Auswertung des Verlaufs des aufgenommen Stroms erfolgen. Die Stromschwankungen, die aufgrund des veränderten ohmschen Widerstands der Parallelschaltung hervorgerufen werden, wenn eine Nut des Kommutators an einer entsprechenden Kommutatorbürste vorbeiläuft, werden dazu im Zeitbereich ausgewertet. Bei dieser Maßnahme wird durch eine geeignete Filterung ein diskretes Signal erzeugt, welches das Auftreten einer Nut anzeigt. Nachteilig ist jedoch, dass durch die schwach ausgeprägten Stromschwankungen eine eindeutige Signalauswertung schwer zu erreichen ist. Die entsprechenden Filter sind sowohl in diskreter Form als auch durch geeignete Algorithmen aufwendig zu realisieren und schwer abzustimmen.

Es ist Aufgabe der vorliegenden Erfindung, eine Möglichkeit zur Bestimmung des absoluten Lagewinkels eines Elektromotors ohne Verwendung eines Sensors bereitzustellen.

### Offenbarung der Erfindung

Diese Aufgabe wird durch die Vorrichtung zum Bestimmen einer absoluten Winkellage gemäß Anspruch 1 sowie durch das Motorsystem sowie das Verfahren gemäß den nebengeordneten Ansprüchen gelöst.

Weitere vorteilhafte Ausgestaltungen der Erfindung sind in den abhängigen Ansprüchen angegeben.

Gemäß einem ersten Aspekt ist eine Vorrichtung zum Bestimmen einer absoluten Winkellage eines Rotors eines Elektromotors vorgesehen, wobei der Elektromotor einen Rotor mit mehreren Wicklungen, die jeweils ein oder mehrere Spulenelemente aufweisen, umfasst, wobei der komplexe Widerstand mindestens einer der Wicklungen von dem komplexen Widerstand der anderen der mehreren Wicklungen verschieden ist, wobei eine oder mehrere der Wicklungen abhängig von einer Winkellage des Rotors über ein Bürstenpaar eines Kommutators kontaktierbar sind; umfassend:
- einen Schwingkreis, der mit mindestens einer über den Kommutator an die durch das Bürstenpaar kontaktierte Wicklung gebildet ist;
- einen Verstärker, der mit dem Schwingkreis verbunden ist, um die Schwingung des Schwingkreises anzuregen;
- eine Auswerteeinheit, um die Frequenz der Schwingung zu erfassen und eine Angabe der Frequenz als Angabe über die absolute Winkellage bereitzustellen.

Die obige Vorrichtung ermöglicht es, in einfacher Weise ohne Vorsehen eines zusätzlichen Sensors die absolute Winkellage des Rotors anhand einer Schwingfrequenz eines durch die jeweils kontaktierte Wicklung gebildeten Schwingkreises zu bestimmen.

Weiterhin kann der Schwingkreis mit Hilfe einer Kapazität gebildet werden, die über Kopplungselemente induktiv oder kapazitiv mit das Bürstenpaar kontaktierenden Ansteuerleitungen verbunden ist.

Gemäß einer Ausführungsform kann die Auswerteeinheit als Frequenzzähler ausgebildet sein, um die Anzahl der Schwingungen während eines vorbestimmten Zeitfensters zu messen, und die gemessene Anzahl als Angabe über die Frequenz bereitzustellen.

Gemäß einem weiteren Aspekt ist ein Motorsystem mit einem Elektromotor vorgesehen, der einen Rotor mit mehreren, jeweils ein oder mehrere Spulenelemente aufweisenden Wicklungen, und mit der obigen Vorrichtung, wobei der komplexe Widerstand mindestens einer der Wicklungen von dem komplexen Widerstand der anderen der mehreren Wicklungen verschieden ist, wobei eine oder mehrere der Wicklungen abhängig von einer Winkellage des Rotors über ein Bürstenpaar eines Kommutators kontaktierbar sind.

Weiterhin kann der komplexe Widerstand der mindestens einen Wicklung
- durch serielles oder paralleles Verschalten mit einem Bauelement mit einem imaginären Widerstand; und/oder
- durch eine veränderte Anzahl von Windungen der Spulenelemente mindestens einer Wicklung ; und/oder
- durch eine geschichtete Anordnung der Spulenelemente der mindestens einen Wicklung an einem Anker des Rotors bezüglich der anderen der mehreren Wicklungen; und/oder
- durch eine veränderte Lage eines der Spulenelemente der mindestens einen Wicklung an einem Anker des Rotors bezüglich der anderen der mehreren Wicklungen bestimmt sein.

Gemäß einer Ausführungsform kann jede der Wicklungen mit einem von den anderen Wicklungen verschiedenen komplexen Widerstand versehen sein.

Insbesondere kann der Kommutator ausgebildet sein, um, abhängig von einer Winkellage des Rotors entweder eine erste Anzahl von Wicklungen oder eine davon unterschiedliche zweite Anzahl von Wicklungen gleichzeitig so zu kontaktieren, dass diese parallel zueinander verschaltet sind.

Gemäß einem weiteren Aspekt ist ein Verfahren zum Bestimmen einer absoluten Winkellage eines Rotors eines Elektromotors vorgesehen, wobei der Elektromotor einen Rotor mit mehreren Wicklungen, die jeweils ein oder mehrere Spulenelemente aufweisen, umfasst, wobei der komplexe Widerstand mindestens einer der Wicklungen von dem komplexen Widerstand der anderen der mehreren Wicklungen verschieden ist, wobei eine oder mehrere der Wicklungen abhängig von einer Winkellage des Rotors über einen Kommutator kontaktiert werden. Das Verfahren umfasst die folgenden Schritte:
- Anregen eines, insbesondere mit Hilfe einer Kapazität, mit einer über das Bürstenpaar kontaktierten Wicklung gebildeten Schwingkreises, so dass der Schwingkreis mit seiner Resonanzfrequenz schwingt;
- Erfassen der Frequenz der Schwingung;
- Bereitstellen einer Angabe der Frequenz als Angabe über die absolute Winkellage.

Weiterhin kann anhand der Angabe der Frequenz eine erste Anzahl der Wicklungen, die durch den Kommutator kontaktiert wird, oder eine Parallelschaltung von einer davon verschiedenen zweiten Anzahl der Wicklungen, die durch entsprechende Schleifkontakte des Kommutators kontaktiert wird, durch Zuordnung bestimmt werden, wobei die Winkellage des Rotors des Elektromotors aus der bestimmten Wicklung oder den bestimmten Wicklungen ermittelt wird.

Gemäß einer weiteren Ausführungsform kann die Winkellage des Rotors durch Vergleichen eines Abschnittes des Verlaufs des resultierenden Signals mit einem vorbestimmten Signalprofil ermittelt werden.

### Kurzbeschreibung der Zeichnungen

Bevorzugte Ausführungsformen werden nachfolgend anhand der beigefügten Zeichnungen näher erläutert. Es zeigen:
Fig. 1 ein Blockschaltbild eines Motorsystems zur Realisierung der Erfassung einer absoluten Winkellage des Rotors eines Gleichstrommotors;
Fig. 2 eine Querschnittsansicht auf den Gleichstrommotor der Fig. 1 mit einem Kommutator und Rotorwicklungen;
Fig. 3a und 3b schematische Darstellungen der Funktionsweise des Kommutators des Gleichstrommotors nach Fig. 1;
Fig. 4 eine Darstellung der verschiedenen Winkellagen, die bei einem Elektromotor mit Wicklungen verschiedenen komplexen Widerstands detektiert werden können.

### Beschreibung von Ausführungsformen

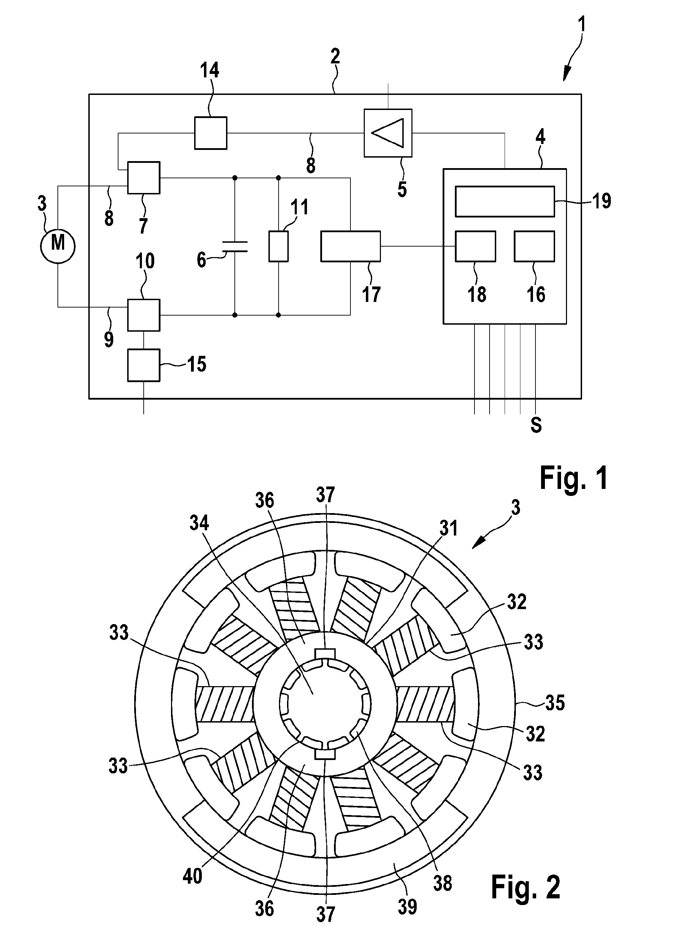

Figur 1 zeigt eine schematische Darstellung eines Motorsystems 1 mit einem Steuergerät 2, an das ein Gleichstrommotor 3 angeschlossen ist. Das Steuergerät 2 umfasst einen Mikrocontroller 4 und eine Endstufe 5, die mit Hilfe von (nicht gezeigten) Leistungsschaltern ausgebildet ist. Der Mikrocontroller 4 steuert die Leistungsschalter der Endstufe 5 mit Hilfe einer Ansteuereinheit 19 so an, dass entsprechend einem dem Mikrocontroller 4 von extern vorgegebenen Steuersignal S eine Gleichspannung über eine Ansteuerleitung 8 an den Gleichstrommotor 3 angelegt wird, um den Gleichstrommotor 3 mit elektrischer Energie zu versorgen. Die Gleichspannung kann beispielsweise mit Hilfe eines Pulsmodulationsverfahrens, insbesondere einem Pulsweitenmodulationsverfahren, bereitgestellt werden, bei dem ein von der Stellgröße abhängiges Tastverhältnis angelegt wird. Der Gleichstrommotor 3 ist mit einem ersten Anschluss mit der Ansteuerleitung 8 und mit einem zweiten Anschluss über eine Masseleitung 9 mit einem Masseanschluss GND verbunden.

Weiterhin kann eine Kapazität 6 vorgesehen sein, die mit einem ersten Anschluss über ein erstes Kopplungselement 7 mit der Ansteuerleitung 8 und über ein zweites Kopplungselement 10 mit der Ansteuerleitung 9 mit seinem zweiten Anschluss verbunden ist. Das erste Kopplungselement 7 und das zweite Kopplungselement 10 können als einfache elektrische Verbindungen der Anschlüsse des Kondensators 6 mit der Ansteuer- bzw. Masseleitung 8, 9 vorgesehen sein. Allgemein können die Kopplungselemente 7, 10 eine induktive oder kapazitive Kopplung vorsehen. Auch transformatorische Kopplungen der Kapazität 6 mit der Ansteuerleitung 8 und der Masseleitung 9 sind denkbar. Die Kapazität 6 bildet mit den aktuell kontaktierten Spulenelementen der Spulenwicklungen im Rotor des Elektromotors 3 einen elektrischen Schwingkreis mit einer Eigenfrequenz, die sich aus der Induktivität der Spulenelemente des Elektromotors 3 und der Kapazität des Kondensators 6 ergibt. Der so gebildete Schwingkreis ist mit einem Verstärker 11 gekoppelt, der die Schwingung des Schwingkreises verstärkt, so dass der Schwingkreis bei seiner Eigenfrequenz schwingt.

Weiterhin können (optional) ein erstes Filterelement 14, das zwischen dem Kopplungselement 7 bzw. der Kopplungsstelle und der Endstufe 5 angeordnet ist, und ein zweites Filterelement 15, das zwischen dem zweiten Anschluss des Gleichstrommotors 3 und dem Masseanschluss GND angeordnet ist, vorgesehen sein. Das erste Filterelement 14 verhindert eine Ausbreitung des von dem Schwingkreis generierten Frequenzsignals auf die Signalleitungen der Leistungsschalter der Endstufe 5 und auf die Gleichstromleitungen der Leistungsschalter der Endstufe 5 und damit auch auf andere Bereiche innerhalb und außerhalb des Steuergeräts 2, die von der erzeugten Frequenz nicht beeinflusst werden dürfen. Das zweite Filterelement 15 verhindert eine Beeinflussung des Massepotenzials durch das Frequenzsignal.

Die Filterelemente 14, 15 können beispielsweise einen Sperrfilter aufweisen, der die von dem Schwingkreis generierten Frequenzen herausfiltert. Alternativ können die Filterelemente 14, 15 beispielsweise einen Tiefpassfilter mit einer Grenzfrequenz aufweisen, die unter der kleinsten, vom Schwingkreis bereitgestellten Frequenz des Frequenzsignals liegt.

Die beiden Anschlüsse des Kondensators 6 sind mit einem Frequenzzähler 17 als Auswerteeinheit verbunden, der die Resonanzfrequenz des Schwingkreises, der aus dem Kondensator 6 und den Spulenelementen der kontaktierten Rotorwicklung gebildet wird, einstellt. Der Frequenzzähler 17 kann beispielsweise ausgebildet sein, um innerhalb eines bestimmten Zeitfensters die Anzahl der Schwingungen zu zählen und den Zählerwert als Angabe über die Resonanzfrequenz des Schwingkreises heranzunehmen.

Der Kondensator 6 ist optional, da die aktuell kontaktierten Spulenelemente der Spulenwicklungen im Rotor des Elektromotors 3 ebenfalls eine Kapazität aufweisen können, die in Verbindung mit deren Induktivitäten einen entsprechenden Schwingkreis bilden. Der Verstärker 11 kann dann über die Kopplungselemente 7, 10 mit dem durch die Spulenelemente gebildeten Schwingkreis verbunden sein.

Das Zeitfenster, während der die Schwingungen gezählt werden, ist vorzugsweise größer als die Periodendauer der sich einstellenden Schwingfrequenzen des Schwingkreises. Um eine ausreichende Diskriminierung bei der Bestimmung der Schwingfrequenz des Schwingkreises zu erhalten, ist vorzugsweise die Periodendauer kleiner 1/5 oder besser noch kleiner 1/10 der Periodendauer der größten möglichen Schwingfrequenz des Schwingkreises.

Wie in der Draufsicht auf eine Schnittansicht des Gleichstrommotors 3 in axialer Richtung der Figur 2 dargestellt ist, weist der Gleichstrommotor 3 fünf Wicklungen 32 auf, die jeweils zwei bezüglich einer Rotorwelle 34 des Rotors 31 gegenüberliegende Spulenelemente 33 umfassen. Ein Stator 35 des Elektromotors 3 weist einander gegenüberliegende Pole 39 eines oder mehrerer Permanentmagneten auf und ist um den Rotor 31 angeordnet, so dass sich der Rotor 31 um die Rotorwelle 34 frei im Inneren des Stators 35 drehen kann.

Der Gleichstrommotor 3 ist im vorliegenden Ausführungsbeispiel so vorgesehen, dass deren Wicklungen 32 mit Hilfe eines Kommutators 36 elektrisch kontaktiert werden können. Der Kommutator 36 weist dazu um die Rotorwelle 34 angeordnete Schleifkontakte 38 auf, die jeweils mit einer Wicklung 32 in Verbindung stehen. Die Schleifkontakte 38 sind voneinander durch Nuten 40 elektrisch isoliert. Jeweils einander gegenüberliegende Schleifkontakte 38 kontaktieren eine der Wicklungen 32. Die Schleifkontakte 38 werden je nach Winkellage mit Hilfe eines Bürstenpaares 37 mit zueinander bezüglich der Rotorwelle 34 gegenüberliegenden Bürsten kontaktiert. Allgemein sind die Schleifkontakte 38 und die Bürsten des Bürstenpaares 37 so angeordnet, dass bei einer bestimmten Stellung des Rotors 31 die Bürsten des Bürstenpaares 37 genau eine Wicklung 32 des Rotors 31 kontaktieren.

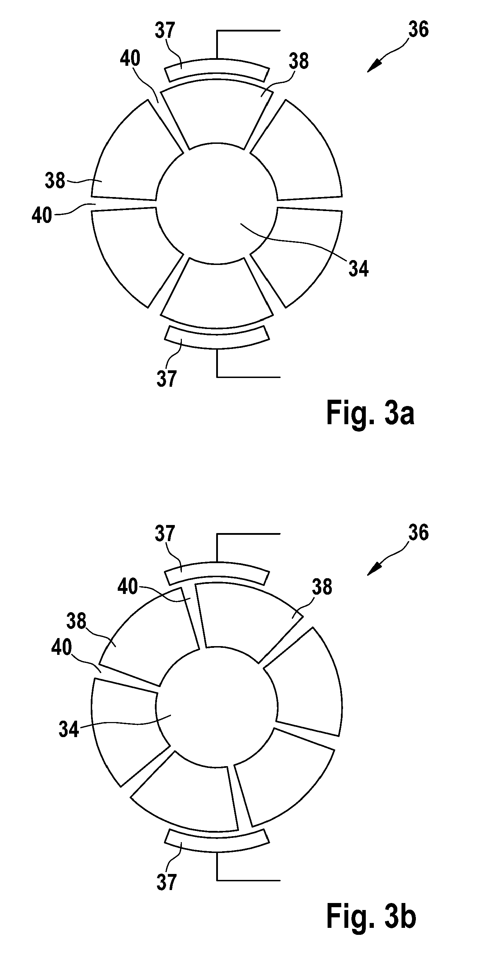

Der Kommutator 36 kann, wie in den Figuren 3a und 3b dargestellt ist, ausgebildet sein, um bezüglich des Rotors 31 die zwei (in den Figuren 3a und 3b gezeigten) Kontaktierungszustände einzunehmen, die bei einer Rotation des Rotors 31 wechselweise eingenommen werden. In dem in Figur 3a gezeigten Rotationszustand kontaktiert ein Bürstenpaar 37 des Kommutators 36 eine einzelne Wicklung 32 des Gleichstrommotors 3 und beim Kontaktierungszustand der Figur 3b kontaktiert das Bürstenpaar 37 des Kommutators 36 zwei Wicklungen 32 des Gleichstrommotors 3 über Nuten 40 zwischen zwei benachbarten Schleifkontakten 38 hinweg. Allgemein kann das Bürstenpaar 37 eine erste Anzahl von Wicklungen 32 in einem Kontaktierungszustand und eine zweite Anzahl von Wicklungen 32 in einem weiteren Kontaktierungszustand kontaktieren.

Weiterhin unterscheiden sich in der Praxis fertigungsbedingt die einzelnen Wicklungen 32 hinsichtlich ihres komplexen Widerstands, so dass jeder Wicklung 32 ein individueller komplexer Widerstand zugeordnet werden kann. Wird festgestellt, dass die Unterschiede zwischen den komplexen Widerständen der einzelnen Wicklungen 32 nicht ausreichend groß sind, so können diese mit geeigneten passiven Bauelementen beschaltet werden, um jede der Wicklungen 32 mit einem individuellen komplexen Widerstand zu versehen, der sich von dem komplexen Widerstand mindestens einer der übrigen Wicklungen 32 unterscheidet. Die Auswertung des komplexen Widerstands derjenigen Spulenwicklung 32 des Rotors 31, die gerade durch das Bürstenpaar 37 kontaktiert wird, kann somit eine Angabe über die absolute Winkellage des Rotors 31 des Gleichstrommotors 3 angeben.

Um den komplexen Widerstand einer der Spulenwicklungen 32 des Elektromotors 3 von anderen Spulenwicklungen 32 unterscheidbar zu machen, kann beispielsweise eine veränderte Lage der Spulenwicklung 32 auf den Ankern des Rotors 31, eine Schichtung der Spulenwicklung 32, eine Serienschaltung der Spulenwicklung 32 mit einem Bauelement mit einem realen bzw. komplexen Widerstand, eine Parallelschaltung der Spulenwicklung 32 mit einem Bauelement mit einem realen und/oder komplexen Widerstand oder das Vorsehen eines verschiedenen magnetisch aktiven Materials im Inneren der Spulen der Spulenwicklungen 32 vorgesehen werden. Auch andere Maßnahmen wie z. B. eine von den anderen Spulenwicklungen 32 abweichende Windungszahl und dergleichen sind denkbar, so lange sie nicht den gewünschten Betrieb des Elektromotors beeinträchtigen, insbesondere nicht eine Unwucht in dem Rotor 31 des Gleichstrommotors 3 hervorrufen.

Wenn eine bestimmte Spulenwicklung 32 mit dem eingestellten elektrischen Parameter über den Kommutator 36 kontaktiert wird, befindet sich der Kommutator 36 in einer bestimmten Kommutatorstellung. Da der Kommutator 36 fest mit der Rotorwelle 34 des Gleichstrommotors 3 verbunden ist, ist damit auch die Winkellage der Rotorwelle 34 bestimmbar. Auch können mehrere oder alle Spulenwicklungen 32 mit unterschiedlichen elektrischen Parametern, insbesondere mit unterschiedlichen elektrischen Induktivitäten, versehen sein, so dass mehrere, insbesondere der doppelten Anzahl der Spulenwicklungen 32 entsprechende, absolute Winkellagen der Rotorwelle 34 unterschieden werden können. Allgemein bestimmt die Anzahl der Schleifkontakte 38 die mögliche Auflösung bzw. die Anzahl der detektierbaren Winkellagen der Rotorwelle 34. Durch Detektieren einer Abfolge von sich aus den elektrischen Parametern ergebenden Schwingfrequenzen des Schwingkreises bei einem Betrieb des Gleichstrommotors 3 kann weiterhin eine Drehrichtung der Rotorwelle 34 und deren Drehgeschwindigkeit ermittelt werden.

Das momentan von dem Bürstenpaar 37 kontaktierte Spulenpaar 33 wird wie folgt festgestellt. Der aus dem Kondensator 6 und der jeweils kontaktierten Spulenwicklung bzw. Spulenwicklungen resultierende Schwingkreis beginnt, angeregt durch den Verstärker 11, zu schwingen und es stellt sich eine Schwingfrequenz ein, die der Resonanzfrequenz des Schwingkreises entspricht. Die Resonanzfrequenz des Schwingkreises ist von der Induktivität der zwischen den Bürsten des Bürstenpaares liegenden Induktivität und der Kapazität des Kondensators 6 bestimmt. An den Anschlüssen des Kondensators 6 wird das Schwingungssignal abgegriffen und in dem Frequenzzähler 17 wird entsprechend die sich einstellende Schwingfrequenz ermittelt. Die sich einstellende Schwingfrequenz wird in geeigneter Weise an den Mikrocontroller 4 kommuniziert. Dies kann in digitaler Weise als auch durch ein analoges Spannungssignal erfolgen, dessen Höhe die detektierte Frequenz angibt. Zur Wandlung eines analogen Signals zur Angabe der sich einstellenden Schwingfrequenz kann ein Analog-Digital-Wandler 18 vorgesehen sein.

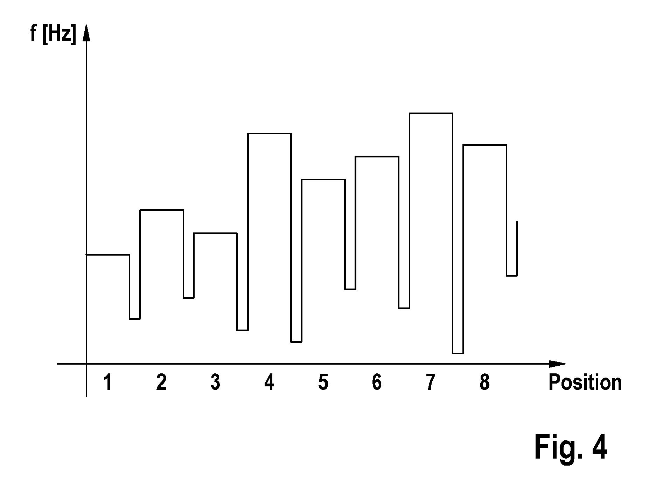

In Fig. 4 ist ein möglicher Verlauf der Frequenzen des Schwingungssignals bei einer Drehung des Rotors erkennbar. Man erkennt, dass je nach Lage des Rotors sich eine unterschiedliche Schwingfrequenz einstellt. Zwischen den Bereichen der unterschiedlichen Schwingfrequenz befinden sich Einbrüche der Schwingfrequenz, wenn zwei Spulenwicklungen des Rotors gleichzeitig kontaktiert werden, wodurch sich die Induktivität erhöht und damit die Resonanzfrequenz des Schwingkreises vermindert wird. In einem Referenzlauf kann das Profil eines individuellen Elektromotors 3 eingelernt werden, und die sich einstellenden Resonanzfrequenzen in einer entsprechenden Speichereinheit 16 in dem Mikrocontroller 4 gespeichert werden. Im späteren Normalbetrieb wird dann die sich jeweils einstellende Schwingfrequenz mit den in der Speichereinheit 16 abgelegten Schwingfrequenzen verglichen und bei Übereinstimmung der gemessenen Schwingfrequenz mit einer der in der Speichereinheit abgelegten Schwingfrequenzen wird die entsprechende der gespeicherten Schwingfrequenz zugeordnete Rotorlage ermittelt und entsprechend bereitgestellt bzw. ausgegeben. Durch das Feststellen der absoluten Winkellage kann eine durch Integrieren oder auf sonstige Weise durch Differenzgrößen ermittelte absolute Winkellage zyklisch korrigiert oder normiert werden. Dadurch wird eine mögliche Abweichung der tatsächlichen von der zu erwartenden Winkellage minimiert oder sogar eliminiert.

## Patentansprüche

1. Vorrichtung zum Bestimmen einer absoluten Winkellage eines Rotors (31) eines Elektromotors (3), wobei der Rotor (31) des Elektromotors (3) mehrere Wicklungen (32), die jeweils ein oder mehrere Spulenelemente (33) aufweisen, umfasst, wobei der komplexe Widerstand mindestens einer der Wicklungen (32) von dem komplexen Widerstand der anderen der mehreren Wicklungen (32) verschieden ist, wobei eine oder mehrere der Wicklungen (32) abhängig von einer Winkellage des Rotors (31) über ein Bürstenpaar eines Kommutators kontaktierbar sind; umfassend:
- einen Schwingkreis, der mit mindestens einer über den Kommutator an die durch das Bürstenpaar kontaktierte Wicklung (32) gebildet ist;;
- einen Verstärker (11), der mit dem Schwingkreis verbunden ist, um die Schwingung des Schwingkreises anzuregen;
- eine Auswerteeinheit (17), um die Frequenz der Schwingung zu erfassen und eine Angabe der Frequenz als Angabe über die absolute Winkellage bereitzustellen.

2. Vorrichtung nach Anspruch 1, wobei der Schwingkreis mit Hilfe einer Kapazität (6) gebildet wird.

3. Vorrichtung nach Anspruch 2, wobei die Kapazität (6) über Kopplungselemente (7, 10) induktiv oder kapazitiv mit das Bürstenpaar kontaktierenden Ansteuerleitungen (8, 9) verbunden ist.

4. Vorrichtung nach einem der Ansprüche 1 bis 3, wobei die Auswerteeinheit (17) als Frequenzzähler ausgebildet ist, um die Anzahl der Schwingungen während eines vorbestimmten Zeitfenster zu messen, und die gemessene Anzahl als Angabe über die Frequenz bereitzustellen.

5. Motorsystem mit einem Elektromotor (3), der einen Rotor (31) mit mehreren, jeweils ein oder mehrere Spulenelemente aufweisenden Wicklungen (32), und mit einer Vorrichtung nach einem der Ansprüche 1 bis 4, wobei der komplexe Widerstand mindestens einer der Wicklungen (32) von dem komplexen Widerstand der anderen der mehreren Wicklungen (32) verschieden ist, wobei eine oder mehrere der Wicklungen abhängig von einer Winkellage des Rotors (31) über ein Bürstenpaar eines Kommutators (36) kontaktierbar sind.

6. Motorsystem nach Anspruch 5, wobei der komplexe Widerstand der mindestens einen Wicklung (32)
- durch serielles oder paralleles Verschalten mit einem Bauelement mit einem imaginären Widerstand; und/oder
- durch eine veränderte Anzahl von Windungen der Spulenelemente mindestens einer Wicklung ; und/oder
- durch eine geschichtete Anordnung der Spulenelemente der mindestens einen Wicklung an einem Anker des Rotors (31) bezüglich der anderen der mehreren Wicklungen (32); und/oder
- durch eine veränderte Lage eines der Spulenelemente (33) der mindestens einen Wicklung (32) an einem Anker des Rotors (31) bezüglich der anderen der mehreren Wicklungen (32) bestimmt ist.

7. Motorsystem nach Anspruch 5 oder 6, wobei jede der Wicklungen (32) mit einem von den anderen Wicklungen (32) verschiedenen komplexen Widerstand versehen ist.

8. Motorsystem nach einem der Ansprüche 5 bis 7, wobei der Kommutator (36) ausgebildet ist, um, abhängig von einer Winkellage des Rotors (31) entweder eine erste Anzahl von Wicklungen (32) oder eine davon unterschiedliche zweite Anzahl von Wicklungen (32) gleichzeitig so zu kontaktieren, dass diese parallel zueinander verschaltet sind.

9. Verfahren zum Bestimmen einer absoluten Winkellage eines Rotors (31) eines Elektromotors (3), wobei der Rotor (31) des Elektromotors (3) mehrere Wicklungen (32), die jeweils ein oder mehrere Spulenelemente (33) aufweisen, umfasst, wobei der komplexe Widerstand mindestens einer der Wicklungen (32) von dem komplexen Widerstand der anderen der mehreren Wicklungen (32) verschieden ist, wobei eine oder mehrere der Wicklungen (32) abhängig von einer Winkellage des Rotors (31) über einen Kommutator (36) kontaktiert werden;
mit folgenden Schritten:
- Anregen eines, insbesondere mit Hilfe einer Kapazität (6), mit einer über das Bürstenpaar kontaktierten Wicklung (32) gebildeten Schwingkreises, so dass der Schwingkreis mit seiner Resonanzfrequenz schwingt;
- Erfassen der Frequenz der Schwingung;
- Bereitstellen einer Angabe der Frequenz als Angabe über die absolute Winkellage.

10. Verfahren nach Anspruch 9, wobei anhand der Angabe der Frequenz eine erste Anzahl der Wicklungen (32), die durch den Kommutator (36) kontaktiert wird, oder eine Parallelschaltung von einer davon verschiedenen zweiten Anzahl der Wicklungen (32), die durch entsprechende Schleifkontakte des Kommutators (36) kontaktiert wird, durch Zuordnung bestimmt werden, wobei die Winkellage des Rotors (31) des Elektromotors (3) aus der bestimmten Wicklung (32) oder den bestimmten Wicklungen ermittelt wird.

11. Verfahren nach einem der Ansprüche 9 bis 10, wobei die Winkellage des Rotors (31) durch Vergleichen eines Abschnittes des Verlaufs des resultierenden Signals mit einem vorbestimmten Signalprofil ermittelt wird.
